# EUROPÄISCHE PATENTANMELDUNG

(11) **EP 0 716 236 A2**
(43) Veröffentlichungstag der Anmeldung: **12.06.1996**
(21) Anmeldenummer: 95118208.8
(22) Anmeldetag: 20.11.1995
(51) Int. Cl.: F15B 15/14, F15B 15/20

(54) **Druckmittelbetätigbare Zylinder/Kolbeneinheit**

(30) Priorität: 07.12.1994 DE 4443472
(71) Anmelder: Ford-Werke Aktiengesellschaft, D-50725 Köln (DE); FORD MOTOR COMPANY LIMITED, Brentwood, Essex CM13 3BW (GB); FORD FRANCE S. A., F-92506 Rueil-Malmaison (FR)
(72) Erfinder: Najork, Rolf, D-51429 Bergisch Gladbach (DE); Wollny, Thomas, D-50997 Koeln (DE)
(74) Vertreter: Ritzkowsky, Harald, Dipl.-Ing.

(57) **Zusammenfassung**

Bei einer druckmittelbetätigbaren Zylinder/Kolbeneinheit zur Bereitstellung zumindest einer Drehbewegung, mit einer Zylinderbohrung (8) mit einer darin radial nach innen ragenden Trennwand (4) und einem von einer sich durch das Zylindergehäuse (2) erstreckenden Kolbenstange (3) radial abragenden Flügelkolben (5) der zwei wechselweise beaufschlagbare radiale Druckräume bildet, sind die radiale Trennwand (4) und der radiale Flügelkolben (5) an der Kolbenstange (3) zwischen zwei auf der Kolbenstange (3) angeordneten, mit der Zylinderbohrung (8) zwei außenliegende Druckräume (14 und 15) bildende Axialkolben (6 und 7) angeordnet und die radiale Trennwand (4) ist im Zylinder (2) über eine Bolzen/Langloch-Verbindung (18/19) axial beweglich aber gegen Verdrehen gesichert angeordnet.

## Beschreibung

Die Erfindung bezieht sich auf eine druckmittelbetätigbare Zylinder/Kolbeneinheit zur Bereitstellung zumindest einer Drehbewegung, der im Oberbegriff des Patentanspruches 1 erläuterten Art.

Aus den Fachbüchern "Ölhydraulik" Grundlagen und Anwendungen von Prof. EM Chaimowitsch; VEB Verlag Technik Berlin 1958, Seite 224 und aus "Ölhydraulikfibel" von Werner Dieter; Krausskopf-Verlag, Wiesbaden, 1960, Seite 148, sind druckmittelbetätigbare Zylinder/Kolbeneinheiten zur Bereitstellung einer Drehbewegung bekannt, wobei jedoch keinerlei Hinweis darauf zu finden waren, daß in einer Zylinder/Kolbeneinheit gleichzeitig eine Dreh- und auch eine Längsbewegung bereitgestellt werden kann.

Es sind zwar allgemein druckmittelbetätigbare Zylinder/Kolbeneinheiten bekannt, die beim Ausführen einer Längsbewegung durch vorgesehene Schraubengänge und dergleichen eine gleichzeitige Drehbewegung zur Verfügung stellen können, solche Anordnungen sind jedoch nicht für die getrennte selektive Steuerung einer Drehbewegung und einer Längsbewegung geeignet.

Solche getrennt steuerbare Dreh- und Längsbewegungen sind zur Anwendung von hydraulisch betätigten Schaltungen von Wechselgetrieben außerst zweckmäßig.

Die bisher auf diesem Gebiet angewandten druckmittelbetätigbaren Zylinder/Kolbeneinheiten haben diese beiden unterschiedlichen Bewegungen jedoch stets mit getrennten Einheiten zur Verfügung gestellt.

Aus der DE-PS 30 17 464 ist eine druckmittelbetätigbare Schalthilfe für ein handschaltbares Wechselgetriebe bekannt, bei der eine Schaltstange durch einen Dreh- oder Rotationskolben zum Einrücken der Gangstufen betätigbar ist, zum Auswählen unterschiedlicher Schaltarme verschiedener Schaltstangen ist jedoch der Schaltfinger axial auf der Schaltstange verschiebbar angeordnet und muß vom Fahrer selbst axial verschoben werden. Die Schalthilfe stellt somit nur eine hydraulische Unterstützung zum Einrücken der Gangstufen zur Verfügung.

Aus der DE-OS 37 01 690 ist ein Servoantrieb zum Betätigen einer Schaltstange eines Stufengetriebes eines Kraftfahrzeuges bekannt, das sowohl eine Dreh- als auch eine Längsbewegung einer Schaltstange durch wechselweise beaufschlagbare Druckkammern zur Verfügung stellt, die Drehbewegung wird hierbei jedoch über eine Art Kurbeltrieb abgeleitet und die Druckkammern sind als Membran-Druckräume aufgebaut.

Die Aufgabe der Erfindung ist es, eine druckmittelbetätigbare Zylinder/Kolbeneinheit zu schaffen, die insbesondere zum automatischen Schalten eines Wechselgetriebes eines Kraftfahrzeuges angewendet werden kann und die sowohl eine für die Vorwahl der Schaltgasse für die Gangstufe erforderliche Wähl-Drehbewegung als auch eine zum Einrücken der Gangstufe erforderliche Einrück-Längsbewegung zur Verfügung stellt.

Gemäß der Erfindung wird diese Aufgabe gelöst, indem eine druckmittelbetätigbare Zylinder/Kolbeneinheit zur Bereitstellung zumindest einer Drehbewegung, die im Kennzeichenteil des Patentanspruches 1 aufgezeigten Merkmale aufweist.

Dadurch, daß die radiale Trennwand und der radiale Flügelkolben von der Kolbenstange zwischen zwei auf der Kolbenstange angeordneten, mit der Zylinderbohrung zwei außenliegende Druckräume bildenden Axialkolben angeordnet sind und die radiale Trennwand im Zylinder axial beweglich, aber gegen eine Drehung über eine Feder/Nut- oder Bolzen/Schlitz-Verbindung gesichert ist, wird mittels nur einer Zylinder/Kolbeneinheit sowohl eine selektiv steuerbare Wähl-Drehbewegung als auch eine selektiv steuerbare Einrück-Längsbewegung bereitgestellt.

In den Ansprüchen 2 und 3 sind weitere zweckmäßige Ausführungsformen der Erfindung erläutert.

Die Erfindung wird anhand zweier in den Zeichnungen gezeigten Ausführungsformen näher erläutert. Es zeigt:
- Fig. 1: einen vertikalen Schnitt durch eine erfindungsgemäße Zylinder/Kolbeneinheit;
- Fig. 2: einen Schnitt entlang der Linie II-II in Fig. 1;
- Fig. 3: einen Schnitt entlang der Linie III-III in Fig. 1;
- Fig. 4: einen vertikalen Schnitt durch eine zweite Ausführungsform einer erfindungsgemäßen Zylinder/Kolbeneinheit;
- Fig. 5: einen Schnitt entlang der Linie V-V in Fig. 4 und
- Fig. 6: einen Schnitt entlang der Linie VI-VI in Fig. 4.

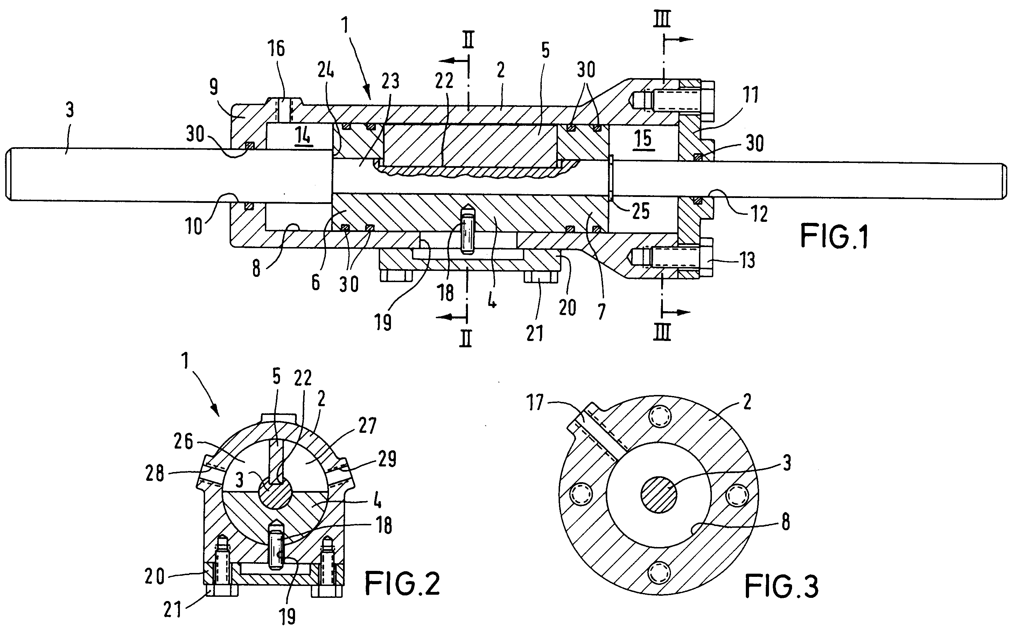

Die in den Figuren 1 bis 3 gezeigte Ausführungsform einer druckmittelbetätigbaren Zylinder/Kolbeneinheit 1 besteht im wesentlichen aus einem Zylindergehäuse 2, einer Kolbenstange 3, einer radialen Trennwand 4, einem radialen Flügelkolben 5 und zwei Axialkolben 6 und 7.

Das Zylindergehäuse 2 ist mit einer Zylinderbohrung 8 versehen und weist in seiner einen Endwand 9 eine Durchtrittsöffnung 10 für die Kolbenstange 3 und an seinem anderen Ende in einem Deckel 11 eine Durchtrittsbohrung 12 für das andere Ende der Kolbenstange 3 auf. Der Deckel 11 ist in geeigneter Weise z.B. über Schrauben 13 mit dem Zylindergehäuse 2 verbunden. Die Zylinderbohrung 8 bildet außenliegend von der Axialkolbenanordnung 6/7 Druckräume 14 und 15, die über entsprechende Anschlußbohrungen 16 und 17 wechselweise mit Druckmittel beaufschlagbar sind.

In der vorliegenden Ausführungsform ist die radial nach innen ragende Trennwand 4 in einem Stück mit den beiden Axialkolben 6 und 7 ausgebildet und wird über einen Bolzen 18, der sich in einem Langloch 19 in der Wandung des Zylindergehäuses 2 axial bewegen kann, gegen Verdrehung festgehalten. Der Bereich des Langloches 19 wird durch einen Deckel 20, der mittels Schrauben 21 befestigt ist, nach außen abgedichtet.

Der Flügelkolben 5 ist zwischen den beiden Axialkolben 6 und 7 verdrehbar angeordnet und wird in einer Nut 22 in im Durchmesser abgesetzten Abschnitt 23 der Kolbenstange 3 durch Kleben, Löten oder dergleichen befestigt. Der abgesetzte Bereich 23 der Kolbenstange 3 bildet eine Schulter 24, die eine Anlagefläche für die Kolben-Trennwand-Kolben-Anordnung 6/4/7 bildet und die mittels eines Sicherungsringes 25 axial auf der Kolbenstange 3 festgelegt wird.

Der Flügelkolben 5 bildet zwischen den beiden Axialkolben 6 und 7 zwei radial getrennte Druckräume 26 und 27, die über entsprechende Anschlüsse 28 und 29 selektiv mit Druckmittel beaufschlagt werden können.

Selbstverständlich sind an den entsprechenden Axialkolben 6 und 7 und an den Durchtrittsöffnungen der Kolbenstange entsprechende O-Ring-Dichtungen 30 vorgesehen.

Im Bereich des Flügelkolbens 5, der sich gegenüber der Zylinderbohrung 8 im Zylindergehäuse 2 und gegenüber den benachbarten Axialkolben 6 und 7 bewegen kann, sind nur Dichtpassungen ohne eingesetzte Dichtmittel vorgesehen, da für die hier lediglich erforderliche Wählbewegung gewisse Leckverluste in Kauf genommen werden können. Sobald durch die Längsbewegung die Gangstufe eingerückt ist, können die entsprechenden Druckkammern vom Druckmitteldruck entlastet werden.

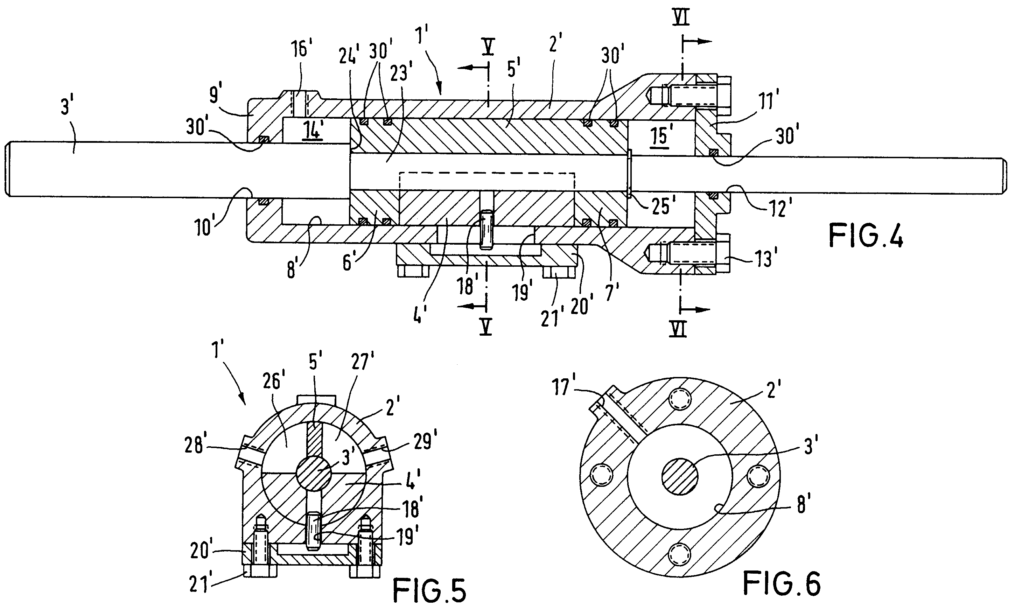

Bei den in den Figuren 4 bis 6 gezeigten zweiten Ausführungsform der Erfindung sind die im wesentlichen übereinstimmenden Bauteile mit den gleichen Bezugszeichen versehen, wobei diese jedoch mit einem Strich-Index versehen sind.

Die Zylinder/Kolbeneinheit 1' besteht wieder aus einem Zylindergehäuse 2', das eine Kolbenstange 3' aufnimmt. Eine radial nach innen ragende Trennwand 4' und ein radial abragender Flügelkolben 5' sind wieder zwischen zwei Axialkolben 6' und 7' angeordnet.

Der weitere Aufbau der erfindungsgemäßen Zylinder/Kolbeneinheit entspricht im wesentlichen dem Aufbau der im Zusammenhang mit den Figuren 1 bis 3 geschilderten Ausführungsform und dementsprechend braucht er nachfolgend nicht noch im einzelnen erläutert zu werden.

Im nachfolgenden wird auf den wesentlichen Unterschied gegenüber der ersten Ausführungsform hingewiesen.

Im Gegensatz zu der ersten Ausführungsform, bei der die radial nach innen ragende Trennwand 4 in einem Stück mit den axialen Kolben 6 und 7 ein einstückiges Bauteil gebildet hat, ist in der zweiten Ausführungsform der radiale Flügelkolben 5' zu einem Bauteil mit den Axialkolben 6' und 7' zusammengefaßt und die radial nach innen ragende Trennwand 4' ist als ein getrenntes Bauteil zwischen den beiden Axialkolben 6' und 7' eingefügt. Die radiale Trennwand 4' wird hierbei wieder über einen Bolzen 18' in einem Langloch 19' in der Wandung des Zylindergehäuses 2' längsbeweglich geführt, jedoch gegen Verdrehen gesichert.

Auch hier sind wieder die entsprechenden Bereiche der Axialkolben und der Durchtrittsbohrungen mit entsprechenden O-Ring-Dichtungen 30' versehen und die Bereiche an der radial nach innen ragenden Trennwand 4' und am radialen Flügelkolben 5' sind durch entsprechende Dichtpassungen abgedichtet, nachdem man hier eine gewisse Leckage zulassen kann.

Selbstverständlich können im Bereich des radialen Flügelkolbens und der radialen Trennwand die aus den Fachbüchern bekannten radial und axial verlaufenden Kantendichtungen angeordnet werden.

## Patentansprüche

1. Druckmittelbetätigbare Zylinder/Kolbeneinheit zur Bereitstellung zumindest einer Drehbewegung, mit einer Zylinderbohrung (8) mit einer darin radial nach innen ragenden Trennwand (4) und einem von einer sich durch das Zylindergehäuse (2) erstreckenden Kolbenstange (3) radial nach außen abragenden Flügelkolben (5), der zwei wechselweise beaufschlagbare radiale Druckräume (26 und 27) bildet,
**dadurch gekennzeichnet**, daß
- die radiale Trennwand (4) und der radiale Flügelkolben (5) an der Kolbenstange (3) zwischen zwei auf der Kolbenstange (3) angeordneten, mit der Zylinderbohrung (8) zwei außenliegende Druckräume (14 und 15) bildenden Axialkolben (6 und 7) angeordnet sind und
- die radiale Trennwand (4) in der Zylinderbohrung (8) über eine Bolzen/Langloch-Verbindung (18/19) axial beweglich aber gegen Drehung festgelegt angeordnet ist.

2. Druckmittelbetätigbare Zylinder/Kolbeneinheit nach Anspruch 1,
**dadurch gekennzeichnet**, daß
- die radiale Trennwand (4) mit den beiden auf der Kolbenstange (3) fest angeordneten Axialkolben (6 und 7) zu einem einstückigen Bauteil zusammengefaßt ist, das über die Bolzen/Langloch-Verbindung (18/19) zwischen der Trennwand (4) und dem Zylindergehäuse (2) axial beweglich, aber gegen Verdrehung festgelegt angeordnet ist und
- der radiale Flügelkolben (5) in einer Nut (22) der Kolbenstange (3 bzw. 23) durch Kleben, Löten oder dergleichen fixiert ist.

3. Druckmittelbetätigbare Zylinder/Kolbeneinheit nach Anspruch 1,
**dadurch gekennzeichnet**, daß
- der radiale Flügelkolben (5') mit den beiden auf der Kolbenstange (3') fest angeordneten Axialkolben (6' und 7') zu einem einstückigen Bauteil zusammengefaßt ist und
- die radiale Trennwand (4') lose zwischen den beiden Axialkolben (6' und 7') angeordnet ist und über die Bolzen/Langloch-Verbindung (18'/19') axial beweglich aber gegen Drehung festgelegt angeordnet ist.
